# EUROPEAN PATENT APPLICATION

(11) **EP 3 182 182 A1**
(43) Date of publication of application: **21.06.2017**
(21) Application number: 16202956.5
(22) Date of filing: 08.12.2016
(51) Int. Cl.: G02B 6/38, G02B 6/32

(54) **DEVICE FOR COUPLING TWO OPTICAL FIBERS, INTENTED TO BE USED IN CONNECTORS**

(30) Priority: 15.12.2015 US 201562267774 P
(71) Applicant: Radiall S.A., 93300 Aubervilliers (FR)
(72) Inventor: RUBINO, Robert, TOLLAND, CT 06084 (US); DECARLO, Michael, COVENTRY, CT 06238 (US)
(74) Representative: Nony

(57) **Abstract**

A device for aligning a first and a second optical fibers each comprising an end mounted into a ferrule (1, 2), comprising:
- an alignment tube (5) in which the two ferrules are mounted in an interference fit, the two ferrules being opposite and spaced with each other;
- an optical component (7, 7', 7") that provides for both a non-physical contact and a low optical coupling loss between the first and second fibers, said component being positioned by a spacer (6) substantially at the midpoint between the first fiber (3) and the second fiber (4), such that the image of the end face of the first fiber (3) is coincident with the end face of the second fiber (4).

## Description

### Technical field

The present invention relates to a device for optically coupling two optical fibers, intended to be used in connectors.

The present invention can be applied to all the current fiber optic connectors types, both simplex and multi-channel that rely upon an alignment sleeve to align two mated fiber optic termini.

The invention is particularly useful for all markets/applications that involve any one/or combination of contaminated environment, high mating cycle, access inconvenient for cleaning of contacts prior to mate.

### Prior art

In various industries, such as telecommunications, optical signals are utilized to transmit data, particularly over long distances. The optical signals are transmitted through fiber optic cables, which are designed to propagate a light signal through the cable via total internal reflection.

There are two major types of technology for fiber-optic connectors known in the art, physical contact (PC) and expanded beam contact (EBC).

In a physical contact fiber-optic connector, two optical cables are guided against and affixed to ceramic ferrules that precisely direct the light signal from one to the other. The ferrules on each side, generally of a ceramic material, are polished precisely so that the light signal is conserved as much as possible from the source to the destination cable. An alignment retainer and axial spring can be used to ensure proper alignment. Issues that arise in a physical contact connector assembly include loss of signal due to a space between ferrules, improper alignment of the ferrules against one another, improper alignment of the optical fiber cables and damage to the pristine optical surface of the polished fiber endface arising from entrapped contamination.

Expanded beam technology for fiber-optic connectors provides an alternative means of fiber-optic transmission. In such a connector, a ferrule guides the light signal from a source cable to a lens. The signal is then refocused by a second lens and directed to its destination. One benefit of this technology is that there is no contact requirement for the fiber optic cables.

Consequently, this technology prevents mechanical damage to the fiber endface arising from entrapped contamination that could attenuate the light signal. However, the difficulties in ensuring proper axial alignment of the cables and the ferrules remain because alignment retainers and axial springs are still used. An alignment retainer contains alignment cavities that each receive a fiber optic terminus from either end, so that the fiber optic terminus can interface in the middle of the cavity.

Current state of the art optical transceivers incorporate an integral alignment sleeve/lens assembly for focusing the light transmitted from a laser to a receiving fiber as well as focusing the light from a receiving fiber to the transceiver's photodiode.

As described in US 2004/0033033 patent application, the assembly may incorporate a ball lens which is integrated into the molded part. Due to the spherical surface of the lens and the asymmetric beam characteristics of the coupled laser, ball lenses have given way to aspheric and asymmetric lens design, that though difficult to realize as a discrete component, are readily replicated as a molded assembly. Due to its superior strength and stability at high temperature, as well as its acceptable optical characteristics in the near-infrared, polyimide is the preferred resin for these types of applications.

As fiber optical links have been deployed in environments more demanding than the telecommunication central office, more and more emphasis has been placed on expanded beam connectors to avoid damage to the optical interface.

US 5,778,124 patent describes a ball lens-based fiber optic collimator, wherein the optical beam exiting the optical fiber is collimated (made parallel). A receiving collimator in turn can be used to focus the collimated light onto its fiber. As the optical magnification of the collimated beam allows a decrease in sensitivity of lateral displacement of the mated connectors at the mating plane, a genre of hermaphroditic connectors, readily cleanable due to their lack of alignment sleeves, was adopted by the Tactical market.

There is a growing interest in expanded beam contacts for the aerospace market.

All of the embodiments of the EBC to date are similar to those disclosed in US 7,775,725 patent wherein each contact features a lens element which is carefully aligned in a minimum of three axes (x & y, radial offset and z, focus). As the required alignment is sub-micron, the cost of the EBC's are an order of magnitude more expensive than their PC counterparts. Moreover, as the optical beam at the mating plane of the EBC is expanded, legacy PC contacts are not intermateable with this next generation of contact.

To address the inherent cost of alignment and integrating the separate components of the EBC, EP2913695A2 patent application proposes a molded, monolithic lens/alignment sleeve that can be installed onto a traditional PC contact. As the lens system is once again a collimator, two such collimators must be used in every connection. Although the molded components promises improved cost over conventional approaches, they are neither backwards compatible with the installed base nor intermateable with PC contacts.

There is therefore a need to further improve the connection between two expanded beam fiber optics, notably in order to improve robustness to contamination, and to allow their integration into connectors, particularly into currently fielded connectors and at a minimum cost.

The invention aims to address all or some of this need.

### Explanation of the invention

The subject of the invention is thus a device for aligning a first and a second optical fibers each comprising an end mounted into a ferrule, comprising:
- an alignment tube in which the two ferrules are mounted in an interference fit, the two ferrules being opposite and spaced with each other;
- an optical component that provides for both a non-physical contact and a low optical coupling loss between the first and second fibers, said component being positioned by a spacer substantially at the midpoint between the first fiber and the second fiber, such that the image of the end face of the first fiber is coincident with the end face of the second fiber.

In other words, the invention consists essentially in a simple alignment sleeve in which an optical component is inserted that forms an image of one fiber on the other fiber allowing backwards compatibility with the installed base of cylindrical ferruled connectors.

Three advantageous embodiments for achieving the optical component can be foreseen:
- a relay lens,
- a graded-index (GRIN) lens, preferably a half-pitch graded-index lens (GRIN lens), as disclosed in [1], [2];
- a stub terminus, preferably with appropriate undercut as mentioned in [3].

Examples of an alternative optical component are not limited to these embodiments.

If the use of a relay lens is known, the present invention utilizes the features of the alignment sleeve to passively align the mated ferrules to achieve low optical loss stemming from misalignment.

As the added optical path length (mate interference) is within the maximum pushback distance of current PC contact designs, the device according to the invention can be incorporated into currently fielded connectors with minimum cost.

One of the advantages of the device according to the invention is that contamination between the mated contacts does not lead to permanent damage of the optical end face.

For a modest increase in optical insertion loss (<1dB), the use of the device according to the invention avoids potential damage to PC contacts that were mated prior to cleaning. This greatly improves mating durability of a connector and potentially has enormous potential for system testing applications.

Another advantage is the application of the device for multipin connectors where there is enormous variation in shell size and polarization keying options.

The device according to the invention can be retrofitted into fielded connectors simply by removing the standard split-alignment sleeve cartridge and replacing it with an alignment sleeve cartridge outfitted with a device according to the invention for every channel.

In this way, economies of scale can be captured on the molded part(s) and compatibility with other product ranges can be extended without undue impact to connector form factor.

According to a variant, the tube, the spacer and the optical component may be molded as a monolithic component.

Alternatively, the tube, the spacer and the optical component are separate components assembled together.

Advantageously, the optical component may be coated with one or more antireflection coatings.

According to a variant, the tube may be split.

The invention encompasses also a single contact optical fiber connector or a multi-contact optical fiber connector comprising a device described hereabove.

### Detailed description

Other advantages and features of the invention will become more apparent upon reading the detailed description of exemplary implementations of the invention, given as illustrative and non-limiting examples with reference to the following figures among which:
- Figure 1 is a longitudinal cross-sectional view of a first example of a device for coupling two optical fibers according to the invention;
- Figure 2 is a perspective and a longitudinal cross-sectional view of the tube and the optical component of the device according to the invention;
- Figure 3 is a longitudinal cross-sectional view of a second example of a device for coupling two optical fibers according to the invention when the optical component is molded as a monolithic component
- Figure 4 is a longitudinal cross-sectional view of a first example of a device for coupling two optical fibers according to the invention.

The device according to the invention allows to couple optically the end of two contacts comprising each a ferrule 1, 2 in which an optical fiber 3, 4 is mounted.

According to the invention, the device includes a cylindrical alignment tube 5 with an internal diameter sized to be an interference fit with the ferrules 1, 2 of the mated contacts. The tube 5 may be split so as to reduce mating friction or fabricated of a material with sufficient compliance to allow insertion of the two ferrules 1, 2.

A spacer 6 is incorporated into the tube 5 to positioning an optical component 7 at the midpoint between the first fiber 3 and the second fiber 4 such that the image of the end face of the first fiber 3 is coincident with the end face of the second fiber 4.

The focal length f of the optical component 7 is chosen such that the distance between the two focal points located at the ends of the two fibers 3, 4 allows a additional pushback of the mated contacts in order to facilitate the retrofit of fielded PC optical connectors. Typically, the distance E between the two end faces of the fibers 3, 4 is on the order of 1 mm and the additional pushback of the mated contacts is ~0.5-0.6 mm each.

The optical beam exiting the first fiber 3 travels rightward towards the optical component 7 and expands to fill a solid angle equivalent to the fiber's numerical aperture. In addition to the focal length, the optical component 7 is sized such that its diameter captures all of the impinging light from the first fiber 3.

In the simplest embodiment of manufacturing, the alignment tube 5 the spacer 6, the optical component 7 may be molded as a monolithic expanded beam alignment sleeve. Furthermore, the alignment tube is not limited to the same diameter on either side of the optical element. In this way, the invention can be used as a 'mating adaptor' allowing coupling between two dissimilar ferrule diameters.

In another embodiment, notably so as to facilitate the application of antireflection coatings on the optical surfaces of the relay lens 7, the spacer 6 and the optical component 7 can be molded as separate components, coated and then assembled into the alignment tube 5.

Other variants and enhancements can be provided without in any way departing from the framework of the invention.

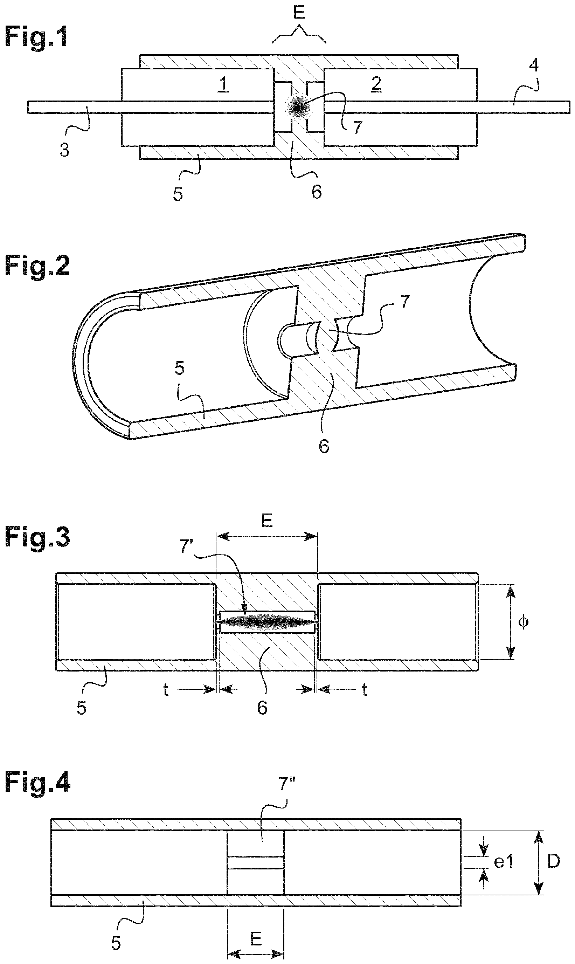

By example, the refractive lens 7 shown in Figures 1 and 2 can be replaced by a GRIN lens 7' of a length somewhat less than the ½ pitch condition causing the focal points to be located in space just before and after the lens surface as shown in Figure 3. For example, E is ~0.5-0.6 mm, the diameter Ø is ~1.25 mm and t is ~0.04 mm.

Taking advantage of the necessary short-length of the optical element, the GRIN lens can be replaced with a 'stub terminus' 7" featuring a graded index multimode fiber of suitable undercut to prevent physical contact of the mated optical surfaces as shown in Figure 4. For example, E is ~1.25 mm, the diameter D is ~1.25 mm and e1 is ∼0.125 mm. The space between the end face of the optical fiber and the entry of the "stub terminus" is not visible of the figure 4.

It should be understood that in both the GRIN and stub-Terminus solutions, the optical surface can be treated with an anti-reflective coating so as to prevent reflective loss at the wavelength(s) of operation.

The expression "comprising a" should be understood to be synonymous with "comprising at least one", unless otherwise specified.

### CITED REFERENCES

[1]:Hecht, Eugene (1987). Optics, 2nd ed., Addison Wesley, ISBN 0-201-11609-X.
[2]: Grintech: http://www.grintech.de/gradient-index-optics.html.
[3]: The Non-Contact Connector: A New Category of Optical Fiber Connector, Benjamin Jian, Arrayed Fiberoptics Corporation. OFC 2015 Proceedings.

## Claims

1. A device for aligning a first and a second optical fibers each comprising an end mounted into a ferrule (1, 2), comprising:
- an alignment tube (5) in which the two ferrules are mounted in an interference fit, the two ferrules being opposite and spaced with each other;
- an optical component (7, 7', 7") that provides for both a non-physical contact and a low optical coupling loss between the first and second fibers, said component being positioned by a spacer (6) substantially at the midpoint between the first fiber (3) and the second fiber (4), such that the image of the end face of the first fiber (3) is coincident with the end face of the second fiber (4).

2. A device according to claim 1 wherein the optical component is a relay lens (7).

3. A device according to claim 1, wherein the optical component is a graded-index (GRIN) lens (7').

4. A device according to claim 1, wherein the optical component is a stub terminus (7").

5. A device according to anyone of the preceding claims, wherein the tube (5), the spacer (6) and the optical component (7, 7', 7") are molded as a monolithic component.

6. A device according to anyone of claims 1 to 4, wherein the tube (5), the spacer (6) and the optical component (7, 7', 7") are separate components assembled together.

7. A device according to anyone of the preceding claims, wherein the optical component (7) is coated with one or more antireflection coatings.

8. A device according to anyone of the preceding claims, wherein the tube (5) is split.

9. A single contact optical fiber connector comprising a device according to anyone of the preceding claims.

10. A multi-contact optical fiber connector comprising a device according to anyone of the claims 1 to 8.
